# EUROPEAN PATENT APPLICATION

(11) **EP 2 621 126 A1**
(43) Date of publication of application: **31.07.2013**
(21) Application number: 11826427.4
(22) Date of filing: 23.09.2011
(51) Int. Cl.: H04L 9/32

(54) **ELECTRONIC DEVICE THAT USES VOICE MODE TO COMMUNICATE WITH EXTERNAL DEVICES**

(30) Priority: 25.09.2010 CN 201020541295 U
(71) Applicant: Tendyron Corporation, Haidian District, Beijing 100083 (CN)
(72) Inventor: LI, Dongsheng, Beijing 100083 (CN)
(74) Representative: 2K Patentanwälte Blasberg Kewitz & Reichel
(86) International application number: PCT/CN2011/080123
(87) International publication number: WO 2012/037900

(57) **Abstract**

Disclosed is an electronic device that uses voice mode to communicate with external devices. The electronic device relates to the field of electronic technology applications. The electronic device comprises a security function module, a voice communication processing module and a voice signal connection component. The voice communication processing module connects both to the voice signal connection component and to the security function module. The voice communication processing module is used convert an analog signal to a digital signal by means of establishing a voice communication connection between the voice signal connection component and an external device such as a mobile phone, thereby enabling data exchange between the security function module and the mobile phone to which it has a communication connection.

## Description

### CROSS REFERENCE TO RELATED APPLICATION

This application claims priority to and benefits of Chinese Patent Application No. 201020541295.0, filed with State Intellectual Property Office, P. R. C. on September 25, 2010, the entire content of which is incorporated herein by reference.

### FIELD

Embodiments of the present disclosure generally relate to an electronic technology application field, and more particularly, to an electronic device for communicating with external devices by audio.

### BACKGROUND

Nowadays, with the popularity of online banking, more and more people begin to use online banking. Currently, an accepted technical solution that is applied to ensure a security of an online banking client is to use a digital certificate for security authentication.

Now, the carrier of a digital certificate used in online banking services is generally an electronic signature token with a USB interface, which is also called a USB key. The USB key (acting as a slave device) is connected to a trading terminal (for example, a PC, acting as a master device) through the USB interface, and is configured to implement security operations such as encryption and decryption of the digital certificate as well as generating and verifying an electronic signature, and then sends results of the security operations to the trading terminal (the PC) through the USB interface.

With the appearance of mobile banking, a mobile phone can also be used as the trading terminal. In order to meet the demands of the digital certification application, the mobile phone used as a trading terminal and the electronic signature token that stores the digital certificate must be used in combination so as to ensure the security of online transaction. However, although the mobile phone is provided with the USB interface, it only can be used as a USB slave device because there is no USB master controller in the mobile phone. In the USB technology field, a USB master device is connected to a USB slave device, and then communicates with the USB slave device. Therefore, directly through the USB interface of mobile phone, the USB key (acting as the USB slave device) cannot communicate with the mobile phone (acting as the USB slave device as well).

Obviously, traditional security electronic devices such as the electronic signature token cannot communicate with the mobile phone. Therefore, how to realize the communication between the electronic signature token and the mobile phone with a low cost is crucial to implementing mobile banking services.

### SUMMARY

Embodiments of the present disclosure provides an electronic device for communicating with external devices by audio, which may solve a problem that traditional security electronic devices such as the electronic signature token cannot communicate with the mobile phone to implement mobile banking services.

According to embodiments of the present disclosure, an electronic device for communicating with external devices by audio is provided. The electronic device comprises a security function module, an audio signal connection component and an audio communication processing module, the audio communication processing module is connected with the security function module and the audio signal connection component respectively. The audio signal connection component is configured to receive a first audio signal from the external devices and to output the first audio signal to the audio communication processing module; the audio communication processing module is configured to convert the first audio signal outputted from the audio signal connection component into a first digital signal and to send the first digital signal to the security function module; and/or the audio communication processing module is configured to convert a second digital signal outputted from the security function module into a second audio signal and to send the second audio signal to the audio signal connection component, and the audio signal connection component is configured to output the second audio signal to the external devices.

In one embodiment, each of the first audio signal and the second audio signal is a dual tone multi frequency signal.

In one embodiment, the audio signal connection component comprises any one of: a combination of a loudspeaker and a microphone; and an audio connection plug for being connected to the external devices and for transmitting the first audio signal or the second audio signal.

In another embodiment, the audio signal connection component comprises any one of: a loudspeaker for broadcasting the first audio signal or the second audio signal; a microphone for receiving the first audio signal or the second audio signal; and an audio connection socket for being connected to the external devices and for transmitting the first audio signal or the second audio signal.

In one embodiment, the security function module is a digital certificate module for generating a digital certificate by the first digital signal.

In another embodiment, the security function module is a dynamic password generating module for generating a dynamic password by the first digital signal, and the electronic device further comprises a displaying module for receiving the dynamic password from the dynamic password generating module and for displaying the dynamic password.

In one embodiment, the electronic device further comprises: a battery, configured to supply a power; and a power controlling module, connected to the battery, the security function module, the audio signal connection component, the audio communication processing module and the displaying module respectively, and configured to control the battery to supply the power to the security function module, the audio signal connection component, the audio communication processing module and the displaying module when the security function module is connected with the external devices through the audio signal connection component and the audio communication processing module.

In another embodiment, the electronic device further comprises a switch, the switch is connected to the power controlling module, and is configured to control the power controlling module to turn on and/or turn off the power supply of the battery.

In yet another embodiment, the electronic device further comprises a USB interface, the USB interface is connected to the security function module and is configured to communicate with the external devices.

According to the present disclosure, when the electronic device is connected to the external devices (for example, a mobile phone), the external devices can send data information (for example, data which to be electronically signed or a challenge code for generating a dynamic password) and associated instructions to the electronic device by audio, and after the electronic device finishes the associated security operations (for example, the generation of electronic signature or the generation of dynamic password), the electronic device can send the generated data information (for example, the electronic signature or the dynamic password) and associated responding messages to the external devices by audio as well. The electronic device according to the present disclosure solves the problem that traditional security electronic devices such as the electronic signature token or dynamic password generator cannot communicate with the mobile phone and cannot finish the mobile banking services. Thus, the electronic device according to the present disclosure can exchange data with the external devices (for example, the mobile phone) with a low cost, and thereby the electronic device according to the present disclosure can be used in combination with the external devices (for example, the mobile phone) to implement banking services (for example, the mobile banking) with a low cost.

### BRIEF DESCRIPTION OF THE DRAWINGS

Fig. 1 is a block diagram of an electronic signature token according to a first embodiment of the present disclosure; and
Fig.2 is a block diagram of a dynamic password generating device according to a second embodiment of the present disclosure.

### DETAILED DESCRIPTION

The embodiments of the present disclosure will be described in detail below.

### Embodiment 1

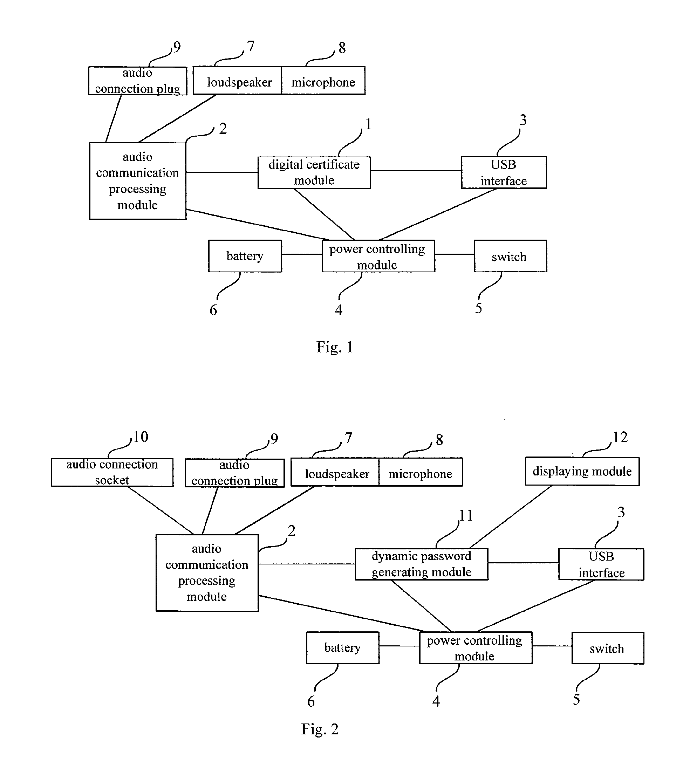

The first embodiment of the present disclosure provides an electronic signature token that communicates with external devices by audio. Fig. 1 is a block diagram of the electronic signature token according to the first embodiment of the present disclosure. As shown in Fig.1, the electronic signature token comprises a digital certificate module 1 (also called a security function module) for realizing a digital certificate application and a battery 6 for supplying a power. The battery 6 may be a rechargeable battery. The electronic signature token may further comprise a USB interface 3. The USB interface 3 is connected to the digital certificate module 1, so that the digital certificate module 1 of the electronic signature token can implement a data communication with the PC through the USB interface 3.

The electronic signature token further comprises an audio communication processing module 2 and an audio signal connection component.

The audio signal connection component is configured to send an audio signal to a mobile phone or receive an audio signal from the mobile phone under a control of the audio communication processing module 2.

As shown in Fig.1, the audio signal connection component may comprise any one of: a loudspeaker 7 for broadcasting or sending the audio signal; a microphone 8 for receiving the audio signal; a combination of the loudspeaker 7 and the microphone 8; and an audio connection plug 9 (for example, an audio plug and an audio cable) for being connected to the external devices (for example the mobile phone) and for transmitting the audio signal.

When the audio signal connection component is the combination of the loudspeaker 7 and the microphone 8, it can be connected to the mobile phone wirelessly to send and receive the audio signal. When the audio signal connection component is the audio connection plug 9 (for example, a microphone for transmitting the audio signal), it can be plugged directly into a headphone jack of the mobile phone, i.e., it can be connected to the mobile phone in a wired connection.

Furthermore, the audio signal connection component may be an audio connection socket 10. The audio connection socket 10 may be connected to an audio plug of the external devices or to an audio plug of an audio convert cable, and then the audio signal may be transmitted between the electronic signature token and the external devices.

The audio communication processing module 2 is connected to the audio signal connection component and the digital certificate module 1 respectively, and is configured to implement an audio communication with the external devices (for example, the mobile phone) through the audio signal connection component. The audio communication processing module 2 is also configured to implement a signal conversion between an analog signal and a digital signal. Specifically, the audio communication processing module 2 converts an audio analog signal received by the audio signal connection component to a digital signal to implement a communication processing, and then the audio communication processing module 2 converts the digital signal to an analog signal and sends out the analog signal through the audio signal connection component.

In one embodiment, the audio communication processing module 2 may exchange data with the mobile phone by a dual tone multi frequency signal. Thus, the audio communication processing module 2 converts a communication protocol for communicating with the mobile phone into a data exchange protocol used by the digital certificate module 1, so that the digital certificate module 1 can exchange data with the mobile phone that has been connected to the digital certificate module 1.

In some embodiments, the electronic signature token may further comprise a power controlling module 4. The battery 6 is connected to other modules (for example the digital certificate module 1 and the audio communication processing module 2) through the power controlling module 4.When the electronic signature token is connected to the external devices (for example the mobile phone) through the audio communication processing module 2 and the audio signal connection component, the power controlling module 4 controls the battery 6 to supply power to the other modules. When the electronic signature token is connected to the PC through the USB interface 3, the power controlling module 4 controls an electric power provided by the PC to supply to the other modules and to charge the battery 6. However, when the electronic signature token is disconnected from the PC, the power controlling module 4 controls the battery 6 to supply power to other modules. Further, when the electronic signature token is unused for a long time, the power controlling module 4 may start a sleep mode of the audio communication processing module 2 and the digital certificate module 1, and the sleep mode consumes a low power, so as to save the power of the battery 6.

Further, the electronic signature token may comprise a switch 5. The switch 5 is connected to the power controlling module 4 and is configured to control the power controlling module 4 to turn on and/or turn off the power supply provided by the battery 6.

In conclusion, when being connected to the electronic signature token mentioned in the first embodiment of the present disclosure, the external devices such as the mobile phone can send data which to be electronically signed (for example, the trading information) and the associated instructions to the electronic signature token by the audio signal, and after the electronic signature token finishes the security operations such as the generation of electronic signature, the electronic signature token can send the generated electronic signature and the associated responding messages to the mobile phone by the audio signal. Thus, the electronic signature token mentioned in the embodiment of the present disclosure may be used in combination with the mobile phone in order to apply the mobile banking services safely and with a low cost.

### Embodiment 2

Fig.2 is a block diagram of a dynamic password generating device according to a second embodiment of the present disclosure.

As shown in Fig.1 and Fig.2, the differences between the first embodiment and the second embodiment are that, the security function module is replaced by a dynamic password generating module 11, and a displaying module 12 is additionally provided in the second embodiment.

The dynamic password generating module 11 is configured to generate a dynamic password by the digital signal received from the audio communication processing module 2, and to send the dynamic password to the displaying module 12 for displaying or to send the dynamic password to the external devices such as the mobile phone for displaying or using through the audio signal connection component.

Furthermore, if the dynamic password is needed to be generated based on a challenge and response method, the external devices such as the mobile phone can send a challenge code and associated instructions to the dynamic password generating device by the audio signal. After receiving the challenge code and associated instructions, the dynamic password generating module 11 generates the corresponding dynamic password by the challenge code.

According to the second embodiment, when the dynamic password generating device is connected to the external device such as the mobile phone, the mobile phone can send the challenge code and associated instructions to the dynamic password generating device by the audio signal, and after the dynamic password generating device generates the dynamic password by the challenge code, it can send the generated dynamic password and associated responding messages to the mobile phone by the audio signal. Thus, the dynamic password generating device mentioned in the present disclosure may be used in combination with the mobile phone to implement the mobile banking service with low cost.

In summary, according to the embodiment of the present disclosure, the electronic signature token may communicate with external devices such as the mobile phone to exchange data in a simple way, so that the mobile phone may apply the digital certificate conveniently with low cost. The electronic signature token mentioned in the embodiments of the present disclosure has the advantages of simple implementation, good functionality and easy popularization.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure. Therefore, the scope to be protected is defined in the claims.

## Claims

1. An electronic device for communicating with external devices by audio, comprising a security function module, an audio communication processing module and an audio signal connection component, the audio communication processing module being connected to the security function module and the audio signal connection component respectively, wherein
the audio signal connection component is configured to receive a first audio signal from the external devices and to output the first audio signal to the audio communication processing module;
the audio communication processing module is configured to convert the first audio signal outputted from the audio signal connection component into a first digital signal and to send the first digital signal to the security function module; and/or
the audio communication processing module is configured to convert a second digital signal outputted from the security function module into a second audio signal and to send the second audio signal to the audio signal connection component, and the audio signal connection component is configured to output the second audio signal to the external devices.

2. The electronic device according to claim 1, wherein each of the first audio signal and the second audio signal is a dual tone multi frequency signal.

3. The electronic device according to claim 1, wherein the audio signal connection component comprises any one of:
a combination of a loudspeaker and a microphone; and
an audio connection plug for being connected to the external devices and for transmitting the first audio signal or the second audio signal.

4. The electronic device according to claim 1, wherein the audio signal connection component comprises any one of:
a loudspeaker for broadcasting the first audio signal or the second audio signal;
a microphone for receiving the first audio signal or the second audio signal; and
an audio connection socket for being connected to external devices and for transmitting the first audio signal or the second audio signal.

5. The electronic device according to claim 1, wherein the security function module is a digital certificate module for generating a digital certificate by the first digital signal.

6. The electronic device according to claim 1, wherein the security function module is a dynamic password generating module for generating a dynamic password by the first digital signal.

7. The electronic device according to claim 6, further comprising:
a displaying module, configured to receive the dynamic password from the dynamic password generating module and to display the dynamic password.

8. The electronic device according to any one of claims 1-7, further comprising:
a battery, configured to supply a power; and
a power controlling module, connected to the battery, the security function module, the audio signal connection component, the audio communication processing module and the displaying module respectively, and configured to control the battery to supply the power to the security function module, the audio signal connection component, the audio communication processing module and the displaying module when the security function module is connected to the external devices through the audio signal connection component and the audio communication processing module.

9. The electronic device according to claim 8, further comprising:
a switch, connected to the power controlling module, and configured to control the power controlling module to turn on and/or turn off the power supply provided by the battery.

10. The electronic device according to any one of claims 1-7, further comprising:
a USB interface, connected to the security function module, and configured to communicate with the external devices.
